# EUROPÄISCHE PATENTSCHRIFT

(11) **EP 1 951 027 B1**
(45) Veröffentlichungstag und Bekanntmachung des Hinweises auf die Patenterteilung: **12.08.2009**
(21) Anmeldenummer: 06776144.5
(22) Anmeldetag: 07.07.2006
(51) Int. Cl.: A01G 9/02, A01G 9/04

(54) **PFLANZENTOPF**
FLOWER POT
POT À PLANTES

(43) Veröffentlichungstag der Anmeldung: 06.08.2008
(73) Patentinhaber: Bikh-Lizenz Gbr, 20539 Hamburg (DE); Von Bismarck, Alexander, 23883 Grambek (DE); Graf von Hardenberg, Philipp, 20354 Hamburg (DE); Knickmeier, Helge, B., 22848 Norderstedt (DE); Irmler, Günther, 20354 Hamburg (DE)
(72) Erfinder: IRMLER, Günther, 20354 Hamburg (DE)
(74) Vertreter: Kossak, Sabine
(86) Internationale Anmeldenummer: PCT/EP2006/006647
(87) Internationale Veröffentlichungsnummer: WO 2008/003345

(56) Entgegenhaltungen:
- WO-A-20/06058721
- DE-A1- 2 141 201
- DE-A1- 2 433 036
- DE-A1- 2 437 903
- DE-A1- 4 401 753
- DE-U1- 8 711 628
- GB-A- 103 027
- NL-C1- 1 019 111

## Beschreibung

Die vorliegende Erfindung betrifft einen Pflanzentopf, insbesondere für Zimmerpflanzen, aufweisend einen nach oben offenen Außentopf, der einen Innenraum zumindest teilweise umgibt, wobei der Außentopf im unteren Bereich mit wenigstens zwei Öffnungen zur Belüftung des Innenraums versehen ist, einen nach oben offenen Innentopf zur Aufnahme von Pflanzsubstrat, wobei der Innentopf in den Außentopf einsetzbar ist, eine Wasseraufnahme mit einem Wasserspeicherraum, die so angeordnet ist, dass Feuchtigkeit zwischen dem Innentopf und dem Wasserspeicherraum ausgetauscht wird, und ein Wassernachfüllelement, das ein gezieltes Befüllen der Wasseraufnahme bei im Außentopf eingesetzten Innentopf ermöglicht, wobei der Innentopf zumindest teilweise so in dem Innenraum angeordnet ist, dass zwischen dem Innentopf, der Wasseraufnahme und dem Außentopf ein Zwischenraum vorgesehen ist, der die Öffnungen im unteren Bereich des Außentopfs und wenigstens eine obere Öffnung im Bereich des oberen Randes des Pflanzentopfs miteinander verbindet, und dass der Innentopf aus dem Innenraum des Außentopfes im bepflanzten Zustand entnommen und wieder in diesen eingesetzt werden kann.

Pflanzentöpfe sind in einer großen Anzahl unterschiedlicher Arten und Formen bekannt. Im einfachsten Fall bestehen sie aus einem topfartigen Behälter, der das Pflanzsubstrat zusammen mit den Wurzeln einer Pflanze aufnimmt. Unter Pflanzsubstrat wird dabei das Material verstanden, das in den topfartigen Behälter gegeben und in das die Wurzeln der Pflanze eingebettet werden. Pflanzsubstrate speichern Luft, Wasser und Nährstoffe. Beispiele für Pflanzsubstrate sind Erde, Sand, Ton, Bims, Lava oder Torf. Da die Behälter durch das Pflanzsubstrat, die Pflanze selbst sowie zugegebenes Wasser und zugegebene Nährstoffe leicht verschmutzt und beschädigt werden, bestehen sie häufig aus Kunststoff und sind rein funktionell ausgebildet. Um das äußere Erscheinungsbild der regelmäßig als Zimmer- oder Gartenschmuck verwendeten Pflanzen mit ihren Pflanzentöpfen zu verbessern, werden die angesprochenen Behälter in aller Regel als Innentopf in einem äußeren Übertopf angeordnet, dem das gewünschte Erscheinungsbild leichter verliehen werden kann und der häufig aus Keramik oder Ton hergestellt wird.

Bei der Wahl des Aufbaus eines Pflanzentopfs spielen jedoch nicht nur ästhetische Gesichtspunkte eine Rolle. Insbesondere für Zimmerpflanzen ist es wichtig, dass der Pflanze, die außerhalb ihres natürlichen Lebensumfeldes bestehen muss und der gegenüber Freilandpflanzen nur ein stark verringerter Raum für ihre Wurzeln zur Verfügung steht, so weit wie möglich optimale Lebensbedingungen geboten werden. Diese sind eine Funktion von Faktoren wie den Licht- und Temperaturbedingungen sowie der Wasser- und Luftversorgung der Pflanze. Die letzteren beiden Faktoren werden durch den Pflanzentopf beeinflusst.

In einen Behälter eingepflanzte Pflanzen werden üblicherweise mit Wasser versorgt, indem Wasser auf das Pflanzsubstrat gegossen wird. Dabei muss diejenige Person, die die Pflanze versorgt, darauf achten, dass die Wurzeln der Pflanze weder austrocknen noch stauender Nässe ausgesetzt werden. Dieses erfordert nicht nur ein regelmäßiges und sorgfältiges Gießen, sondern auch eine richtige Dosierung der bei jedem Gießvorgang zugeführten Wassermenge.

Für alle Pflanzen ist zudem eine gute Belüftung ihrer Wurzeln wünschenswert, da so eine Fäulnis der Wurzeln verhindert werden kann, und Pflanzen auch über die Wurzeln Stoffe aus der Luft für ihren Stoffwechsel aufnehmen. Für einige Pflanzen, wie etwa epiphytisch wachsende Orchideen oder Farne, ist die Luftversorgung der Wurzeln sogar essentiell. Um die Belüftung des Wurzelwerks zu verbessern, sind Pflanzentöpfe bekannt, die Luftzirkulationsöffnungen aufweisen.

Die erforderliche Wasser- und Luftversorgung der Wurzeln sind nicht unabhängig voneinander. So hat eine zu hohe Wasserversorgung ohne Zusatzmaßnahmen stauende Nässe im Pflanzsubstrat zur Folge, die zu einer mangelnden Durchlüftung des Wurzelbereiches und letztendlich zum Faulen der Wurzeln und dem Eingehen der Pflanze führt. Umgekehrt kann eine hohe Luftzirkulation bei unzureichender Wasserversorgung zum schnelleren Austrocknen des Pflanzsubstrates und der Wurzeln beitragen. Neben dem Wassermangel für die Pflanze hat dieses den Nachteil, dass die Wiederbefeuchtung des ausgetrockneten Pflanzsubstrats häufig mit erheblichen Schwierigkeiten verbunden ist.

Aus diesen Gründen sind die richtigen Lebensbedingungen nur schwer und mit relativ hohem Zeitaufwand aufrecht zu erhalten. Daher sind Personen, die nicht über ausreichend Erfahrung verfügen, häufig nicht in der Lage, eine Pflanze über einen längeren Zeitraum am Leben zu halten. Das hat zur Folge, dass viele Menschen auf Pflanzen in ihrem Wohn- oder Arbeitsumfeld verzichten, obwohl Pflanzen bekanntermaßen auch über die Sauerstoffproduktion hinaus einen positiven Einfluss auf die Gesundheit haben können. So gibt es Pflanzen, die z.B. durch Baumaterialien, Einrichtungsgegenstände oder elektronische Geräte erzeugte Giftstoffe und gefährliche Gase filtern bzw. eliminieren und auf diese Weise für eine saubere, sauerstoffreiche und schadstoffarme Raumluft sorgen können. Beispielsweise sind spezielle Pflanzen bekannt, die gezielt Giftstoffe, die für unter dem Begriff "Sick Building Syndrome" zusammengefasste Beschwerden und Krankheiten wie Allergien, Atembeschwerden oder Krebs verantwortlich gemacht werden, in ihren Stoffwechsel einbinden und in ungefährliche Stoffe wie Sauerstoff umsetzen. Viele solcher Pflanzen entstammen jedoch tropischen oder subtropischen Gebieten und benötigen daher Lebensbedingungen, die sie als Zimmerpflanze nicht ohne weiteres vorfinden. Die Luftreinigung erfolgt dabei im Wesentlichen nicht über das Blattgrün, sondern fast ausschließlich über die Wurzeln und das sie umgebende Pflanzsubstrat, so dass auch diesbezüglich eine gute Luftzirkulation im Wurzelbereich von entscheidender Bedeutung ist.

Um den Problemen in Zusammenhang mit der Pflege bzw. Haltung von Pflanzen zu begegnen, sind Pflanzentöpfe mit dem Ziel entwickelt worden, eine falsche Wasserversorgung der Pflanze und/oder eine unzureichende Belüftung des Wurzelbereiches mit möglichst geringem Aufwand für den Menschen zu verhindern. Derartige Pflanzentöpfe weisen im allgemeinen einen nach oben offenen Innentopf zur Aufnahme des Pflanzsubstrats, einen nach oben offenen Übertopf bzw. Außenmantel zur Aufnahme des Innentopfes und ein Wasserreservoir auf, das als Bodenbereich des Übertopfes oder als separater Behälter ausgebildet sein kann. Die Wandungen des Innentopfes weisen häufig Öffnungen auf, über die Luft in den Innentopf gelangen kann. Ferner steht der Innentopf mit dem Wasserreservoir in der Weise in Verbindung, dass Wasser zwischen dem Innentopf und dem Wasserreservoir ausgetauscht werden kann. Eine solche Anordnung hat den Vorteil, dass Wasser, das nicht sofort von den Wurzeln aufgenommen und nicht in dem Pflanzsubstrat gespeichert werden kann, in dem Wasserreservoir aufgenommen, zwischengespeichert und anschließend in den Innentopf zurückbefördert werden kann, wenn die Wurzeln wieder Wasser benötigen. Auf diese Weise wird im Idealfall sowohl eine stauende Nässe mit der damit verbundenen mangelnden Belüftung der Wurzeln als auch ein Austrocknen der Wurzeln verhindert. Ferner verlängern sich die Gießintervalle. Jedoch sind die oben genannten Ziele durch bekannte Pflanzentöpfe nicht ausreichend verwirklicht worden.

Aus der DE 91 12 058 U1 ist ein Pflanzentopf für die Einzelpflanzung von Orchideen bekannt. Dieser weist einen Innentopf zur Aufnahme des Pflanzsubstrates und der Pflanze und einen Übertopf auf, der im oberen Bereich seiner Seitenwand Belüftungsöffnungen aufweist. Der Innentopf weist in seiner Seitenwand und in seinem Boden ebenfalls Belüftungsöffnungen auf und ist in der Weise in dem Übertopf angeordnet, dass sich sein Boden in einem Abstand oberhalb des Bodens des Übertopfes befindet. Auf diese Weise ist der unterhalb des Innentopfes befindliche Innenraum des Übertopfes als Wasserreservoir ausgebildet. Zur Wasserversorgung der Pflanze wird Wasser bis zu einer maximalen Füllhöhe in den Übertopf gegossen, die unterhalb des Bodens des Innentopfes liegt. Die Wasserversorgung erfolgt dann über verdunstendes Wasser, das durch Öffnungen in dem Boden und in der Wandung des Innentopfes in diesen gelangt. Dieser Aufbau hat den Nachteil, dass bei übermäßigem Gießen der Boden des Gittertopfes mit dem im Reservoir befindlichen Wasser mit der Folge einer zu starken Durchnässung des Pflanzsubstrats in Berührung kommen kann und dass darüber hinaus die Luftzirkulation trotz der Belüftungsöffnungen nicht oder nur begrenzt möglich ist.

Die WO 02/082884 offenbart einen Pflanzentopf, der einen Gittertopf zur Aufnahme von Pflanzsubstrat, einen als Wasserspeicher dienenden Trägereinsatz, auf den der Gittertopf aufgesetzt wird, und einen Abdeckmantel bzw. Außenmantel aufweist, in dem Gittertopf und Trägereinsatz montiert und mit dem Gittertopf und Trägereinsatz jeweils lösbar verbunden sind. Der Abdeckmantel verbreitert sich nach unten konisch, so dass zwischen Gittertopf bzw. Trägereinsatz und Abdeckmantel ein umlaufender, nach unten offener und nach oben geschlossener Luftschlitz vorgesehen ist, über den die Belüftung erfolgen kann. Dieser Aufbau hat den Nachteil, dass er kompliziert ist und bei der Wartung des Pflanzkorbes oder Wasserspeichers einen hohen Aufwand erfordert, da viele Einzelkomponenten auseinandergebaut werden müssen. Ferner ist die Belüftung nur beschränkt möglich, da ein hinreichender Luftstrom in dem Luftschlitz aufgrund des nur wenig luftdurchlässigen Pflanzsubstrats nicht aufrechterhalten werden kann. Diese Anordnung hat des Weiteren den Nachteil, dass der Pflanzentopf vor dem Pflanzen zusammengesetzt werden muss. Ein nachträgliches Austauschen des sichtbaren und somit dekorativen Außentopfs ist nicht oder nur mit großer Mühe möglich, da dieser über die Pflanze geschoben werden müsste.

Ein weiterer Nachteil solcher bekannter Pflanzentöpfe hat seine Ursache darin, dass die Außenmäntel bzw. Übertöpfe regelmäßig aus Keramik oder Ton und die Innentöpfe und die ggf. vorhandenen separaten Wasserspeicher regelmäßig aus Kunststoff hergestellt sind. Da Keramikteile anders als Kunststoffteile nicht mit einer hohen Formgenauigkeit gefertigt werden können, besteht zum einen die Gefahr, dass die einzelnen Komponenten nicht in den vorgesehenen Abständen zueinander angeordnet sind. Beispielsweise kann aufgrund einer Formungenauigkeit der Innentopf so relativ zum Wasserspeicher angeordnet sein, dass der Boden des Innentopfes z.B. unmittelbar mit dem im Reservoir befindlichen Wasser in Berührung kommt. Ferner besteht die Gefahr, dass der Zusammenbau der Komponenten aufgrund der von Fall zu Fall variierenden Dimensionen nicht oder nur mit Schwierigkeiten möglich ist. Dies kann auch dazu führen, dass der Pflanzentopf instabil ist.

Aus der WO 2006/058721 ist ein weiterer Pflanzentopf der zuvor genannten Art bekannt. Hier ist der Innentopf an einem den Außentopf bildenden Mantel aufgehängt. Am Innentopf ist ein nach außen stehender Kragen vorgesehen, der mit Öffnungen versehen ist, durch die Luft austreten kann, die unten durch die Öffnungen im Mantel eingetreten und kaminartig im Zwischenraum nach oben aufgestiegen ist. Der Wasserspeicher ist mit dem Innentopf lösbar verbunden. Der Innentopf ist mit einem Bereich versehen, in den ein Wasserstandanzeiger eingesetzt ist. Eine Ausführungsform des Wasserstandsanzeigers sieht vor, dass durch das Innenrohr des Wasserstandsanzeigers der Wasserspeicher befüllt werden kann.

Verbesserungswürdig an diesem Pflanzentopf ist, dass notwendige Fertigungstoleranzen sehr gering sind, so dass in der Produktion sehr sorgfältig vorgegangen werden muss, was zu höheren Produktkosten führt. Des Weiteren kann theoretisch bei schweren Pflanzen der Innentopf in den Außentopf rutschen und sich verkeilen.

Der Erfindung liegt die Aufgabe zugrunde, einen Pflanzentopf der eingangs geschilderten Art so auszubilden, dass eine einfache und kostengünstige Herstellung möglich ist bei Gleichzeitigem Beibehalten von Belüftung und Bewässerung.

Die Aufgabe wird gemäß der Erfindung gelöst, dass der Innentopf in den Außentopf eingestellt ist und auf der Wasseraufnahme aufsteht, wobei der Innentopfboden mit wenigstens einer zur oberen Öffnung des Innentopfes gerichteten Vertiefung versehen ist. Vorteilhaft ist, dass durch diese erfindungsgemäße Ausführungsform die Fertigungstoleranz erhöht und damit der Aufwand vereinfacht werden kann. Auch kann ein bepflanzter Innentopf sich nicht mehr gegenüber dem Außentopf verkeilen, wodurch das Entnehmen des Innentopfes aus dem Außentopf vereinfacht wird.

Eine vorteilhafte Lehre der Erfindung sieht vor, dass der Außentopf wenigstens zweiteilig in Form eines Mantels und eines Untersetzers aufgebaut ist. Durch den zweiteiligen Aufbau wird es möglich den Mantel beispielsweise aus dekorativen Zwecken auszutauschen. Auch ist eine Reinigung des Außentopfes leichter möglich, da beispielsweise der Untersetzer auf einfache Weise gereinigt werden kann, was bei einem einteiligen Außentopf schwieriger ist.

Weiterhin ist vorteilhaft, dass der Untersetzer Aufstandsaufnahmen für den Mantel aufweist. Auf diese Weise wird eine sichere und abrutschfreie Verbindung zwischen Mantel und Untersetzer gewährleistet.

Eine weitere Lehre der Erfindung sieht vor, dass die Wasseraufnahme in den Untersetzer integriert ist. Hierdurch wird die Anzahl der verwendeten Komponenten reduziert.

Eine weitere Lehre der Erfindung sieht vor, dass die Wasseraufnahme mit Zentrierungsmitteln für den Innentopf versehen ist. Diese Zentrierungsmittel ermöglichen ein genaues Einsetzen des Innentopfes in den Außentopf bzw. den Untersetzer, wodurch wiederum ein genaueres Positionieren ermöglicht wird und ein Verkeilen von Innen- und Außentopf vermieden wird.

Vorteilhaft ist weiterhin, dass die Wasseraufnahme mit einem Überlauf versehen ist. Durch das Vorhandensein eines Überlaufes kann der Anwender sofort feststellen, wenn der Wasserspeicherraum der Wasseraufnahme hinreichend gefüllt ist, da dann das Wasser in den Überlauf eintritt. Der Überlauf ist vorteilhafterweise in den unteren Bereichen der Belüftungsöffnungen des Außentopfes angeordnet, wobei der Überlauf besonders bevorzugt segmentiert ausgeführt ist. Durch die Anordnung in den Belüftungsöffnungen ist es für den Anwender möglich, in den Überlauf direkt einzusehen.

Weiterhin ist vorteilhaft, dass der Wasserspeicherraum und der Überlauf durch eine Ringwand voneinander getrennt sind. Durch die vorgesehene Ringwand kann die Trennung auf einfache Weise erfolgen.

Eine weitere Lehre der Erfindung sieht vor, dass die obere Belüftungsöffnungen in einem am Innentopf vorgesehenen und seitlich zum oberen Rand des Außentopfs abstehenden Rand und/oder in einem am Außentopf vorgesehenen und seitlich zum oberen Rand des Innentopfes abstehenden Rand angeordnet sind. Auf diese Weise wird gezielt ein Abschluss im oberen Bereich zwischen Außen- und Innentopf vorgesehen und gleichzeitig eine Belüftung des Zwischenraums zwischen Außen-und Innentopf auf einfache Weise gewährleistet.

Gemäß einer weiteren Lehre der Erfindung ist eine Wasserstandsanzeige für den Wasserstand in der Wasseraufnahme vorgesehen, wobei die Wasserstandsanzeige bevorzugt innerhalb des Wassernachfüllelements und/oder in den oberen Belüftungsöffnungen angeordnet ist. Durch die Wasserstandsanzeige kann der Anwender des Pflanzentopfes auf einfache Weise feststellen, ob noch ausreichend Wasser in der Wasseraufnahme vorhanden ist. Vorteilhafterweise ist das Wassernachfüllelement mit einem Eingießbereich versehen. Das Bereitstellen eines Eingießbereichs erleichtert das Nachfüllen der Wasseraufnahme. Das Wassernachfüllelement ist dabei vorteilhafterweise im Innenraum des Innentopfes in einem dafür vorgesehenen Aufnahmebereich angeordnet, der bevorzugt eine Aussparung ist. Das Wassernachfüllelement besteht darüber aus einem Trennelement, das bevorzugt einen abgeschlossenen Kanal mit der Wandung des Innentopfes bildet. Besonders bevorzugt ist die Wandung des Innentopfes im Aufnahmebereich für das Wassernachfüllelement nicht mit Öffnungen versehen.

Weiterhin ist das Trennelement als ein Zylindermantelflächenelement ausgeführt. Durch das Vorsehen einer Aussparung im Innentopf und das Bereitstellen eines separaten Trennelementes wird der Vorteil erreicht, dass der Innentopf und das Trennelement einfacher hergestellt werden können, da die Werkzeuge hierfür einfacher auszuführen sind. Gleichzeitig wird allerdings die Funktion einer zuverlässigen Befüllung gewährleistet.

Weiterhin können Wassertransportmittel zwischen Wasseraufnahme und Innentopf wie beispielweise Fäden oder Tonelemente vorgesehen sein, durch die eine zusätzliche Überführung von Wasser in den Innentopf gewährleistet wird.

Vorteilhaft ist weiterhin, dass die Vertiefungshöhe der zur oberen Öffnung des Innentopfes gerichteten Vertiefung des Innentopfbodens größer ist, als die maximale Wasserstandshöhe des Wassers in dem Wasserspeicherraum der Wasseraufnahme. Ist die Tiefe der Vertiefung größer als die Höhe der Ringwand, wird damit vermieden, dass der untere Bereich des Innentopfes im Wasser steht, wodurch Staunässe vermieden wird. Gleichzeitig wird ein Überlaufen des zuviel in die Wasseraufnahme aufgegebenen Wassers über die Ringwand dadurch ermöglicht, dass die Vertiefung tiefer als die Höhe der Ringwand ist, und damit ein Abstand zwischen Ringwand und Boden besteht.

Die Erfindung wird im Folgenden anhand eines Ausführungsbeispiels begleitet durch die Zeichnungen näher erläutert. In den Zeichnungen zeigt:
- Fig. 1: eine räumliche Darstellung eines erfindungsgemäßen Pflanzentopfes,
- Fig. 2: eine Seitenansicht der Bestandteil des erfindungsgemäßen Pflanzentopfes,
- Fig. 3a: eine Draufsicht auf einen Mantel einen erfindungsgemäßen Außentopfes,
- Fig. 3b: eine Seitenansicht zu Fig. 3a,

- Fig. 4a: eine Seitenansicht eines Innentopfes eines erfindungsgemäßen Pflanzentopfes,
- Fig. 4b: eine räumliche Ansicht zu Fig. 4a,
- Fig. 4c: eine Draufsicht zu Fig. 4a,
- Fig. 5a: eine Untersicht eines Untersetzers eines erfindungsgemäßen Pflanzentopfes,
- Fig. 5b: eine Schnittansicht durch einen Untersetzer gemäß Fig. 5a,
- Fig. 5c: eine Draufsicht auf den Untersetzer gemäß Fig. 5a,
- Fig. 6a: eine räumliche Darstellung eines Wassernachfüllelements eines erfindungsgemäßen Pflanzentopfes,
- Fig. 6b: eine vergrößerte Ansicht eines Abschnitts zu Fig. 6a,
- Fig.7: eine räumliche Darstellung eines Innentopfes mit Wassernachfüllelement und Wasserstandsanzeige eines erfindungsgemäßen Pflanzentopfes
- Fig. 8: eine geschnittene Ansicht einer räumlichen Darstellung eines zweiten Ausführungsbeispieles eines erfindungsgemäßen Pflanzentopfes,
- Fig. 9a: eine Seitenansicht eines Innentopfes einer zweiten Ausführungsform eines erfindungsgemäßen Pflanzentopfes,
- Fig. 9b: eine Draufsicht zu Fig. 9a und
- Fig. 10: eine Draufsicht auf einen Mantel einer zweiten Ausführungsform eines erfindungsgemäßen Außentopfes.

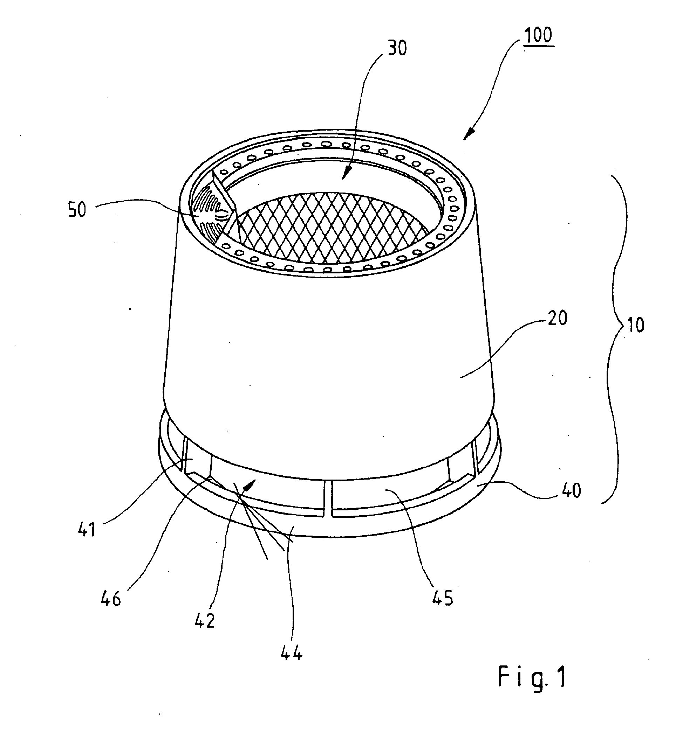

Fig. 1 zeigt einen erfindungsgemäßen Pflanzentopf 100, der aus einem Außentopf 10 und einen Innentopf 30 besteht, wobei im Innentopf 30 ein Wassernachfüllelement 50 vorgesehen ist. Der Außentopf 10 besteht aus einem Mantel 20 und einem Untersetzer 40, hier auch als Wasseraufnahme, wobei der Mantel 20 auf den Untersetzer 40 lösbar aufgesetzt ist.

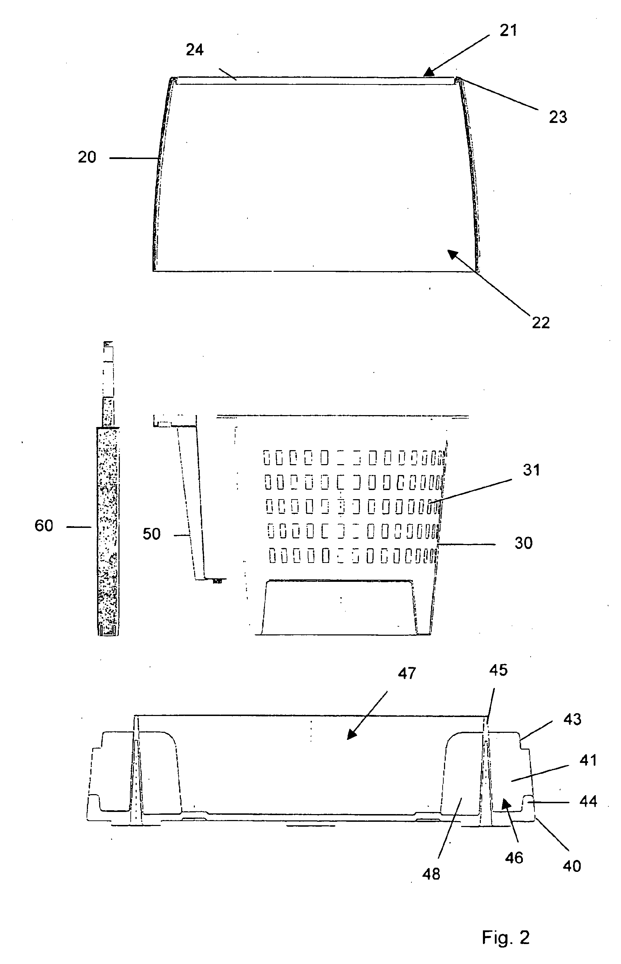

Der Untersetzer 40 ist mit Stegen 41 versehen, die um den Umfang des Untersetzers 40 herum angeordnet sind. Die Stege 41 weisen an ihrem oberen Ende Aufstandsaufnahmen 43 auf (siehe Fig. 2).

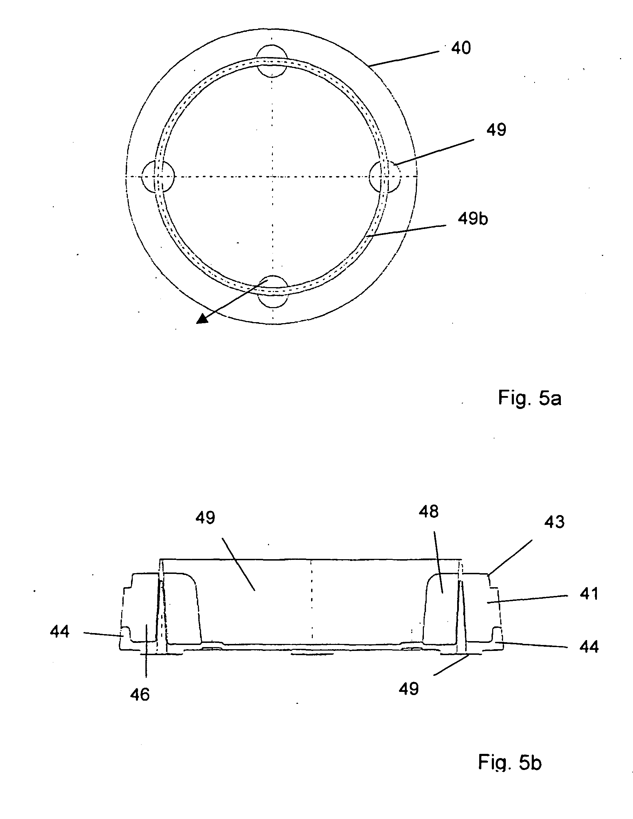

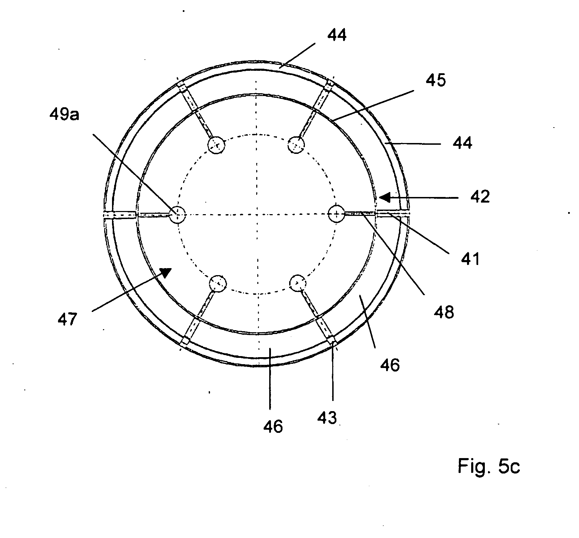

Der äußere Rand des Untersetzers 40 ist mit einer Umlaufkante 44 versehen. Räumlich getrennt von der Umlaufkante 44 ist eine Ringwand 45 angeordnet (siehe auch Fig. 2 und 5b und 5c).

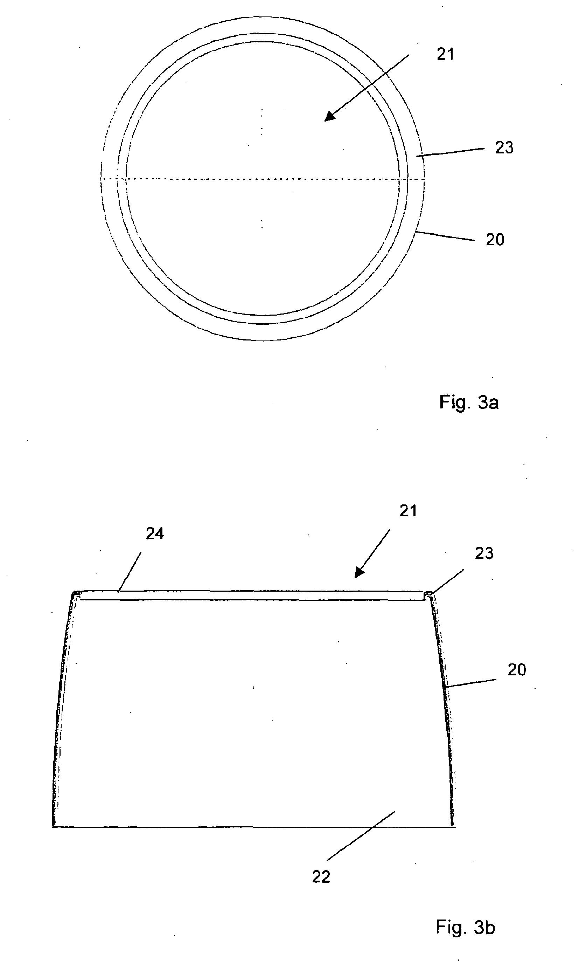

Der Mantel 20 besteht aus einem konisch nach oben verjüngend zulaufenden zylindrischen Mantelelement, das eine obere Öffnung 21 und eine untere Öffnung 22 aufweist (siehe Fig. 3a und 3b). Der Mantel 20 weist einen oberen Rand 23, der einen nach innen gebogenen Abschnitt 24 aufweist, der ein sicheres Einsetzen des Innentopfes 30 in den Mantel 20 ermöglicht und ein Verkeilen zwischen Mantel 20 und Innentopf 30 verhindert, auf.

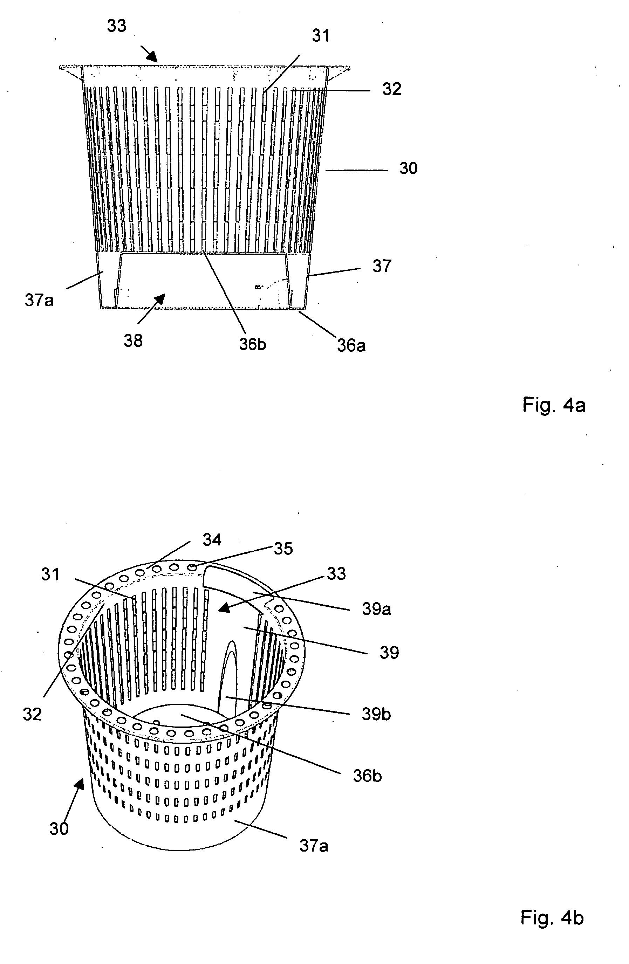

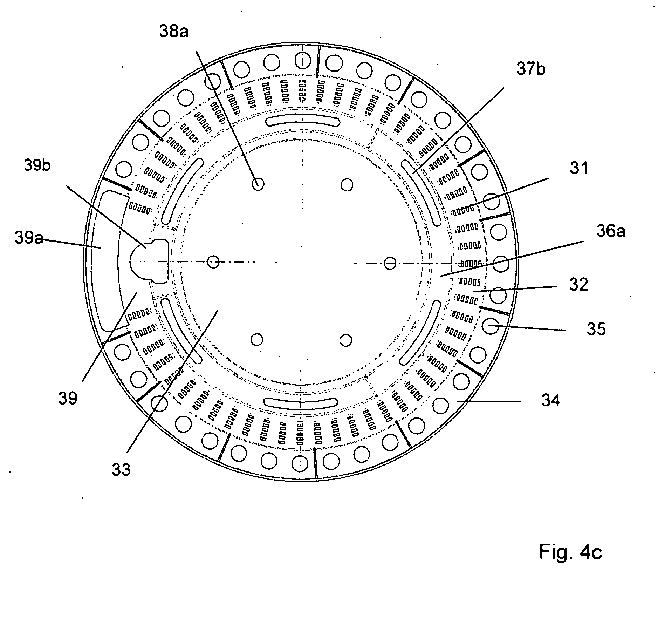

Der Innentopf 30 (siehe Fig. 2 und Fig. 4a bis 4c) weist in seiner umlaufenden Seitenwandung 32 Belüftungsöffnungen 31 auf. Der Oberbereich des Innentopfes 30 weist eine Öffnung 33 auf, durch die das Pflanzsubstrat (nicht dargestellt) in den Innentopf 30 eingeführt wird. Am oberen Ende des Innentopfs 30 ist ein seitlich nach außen stehender Rand 34 vorgesehen, der mit Öffnungen 35 versehen ist. Die Öffnungen 35 dienen als Abluftöffnungen für die durch die Belüftungsöffnungen 42 im unteren Teil des Pflanzentopfes 100 eingetretene und durch den kaminartigen Zwischenraum nach oben steigende Luft. Der Innentopf 30 weist einen Boden 36, der in zwei Abschnitte 36a und 36b unterteilt ist. Der Abschnitt 36a ist der Boden, der zu den Aufstandsabschnitten 37 des Innentopfes 30 gehört. Der Aufstandsabschnitt 37 weist Wandungen 37a auf, die nicht mit Öffnungen zur Belüftung versehen sind. Der Bodenabschnitt 36a ist mit Öffnungen 37b versehen, durch die Wasser hindurchtreten kann. Hierbei handelt es sich beispielsweise um Wasser, das direkt in das Pflanzensubstrat gegeben wurde, um ein Stauen des Wassers im unteren Bereich des Pflanzentopfes zu vermeiden. Der Bodenabschnitt 36b stellt den obersten Bereich der Vertiefung 38 dar. Die Vertiefung 38 ist vom Boden des Pflanzentopfes, gesehen zur Öffnung 33 hin, in den Pflanzentopf eingelassen.

Des Weiteren weist der Innentopf an seiner Wandung 32 einen Aufnahmeabschnitt 39 auf, der nicht mit Öffnungen 31 versehen ist. Der Abschnitt 39 weist zwei Aufsparungen 39a und 39b auf, wobei die Aussparung 39a den oberen Rand 34 und den oberen Bereich der Wandung 32 betrifft und die Aussparung 39b sich ausgehend vom Boden 36 ellipsenförmig entland des Aufnahmeabschnitts 39 erstreckt.

Der Bodenabschnitt 36b der Vertiefung 38 ist mit Öffnungen 38a versehen, die ebenfalls wiederum zum Wasseraustritt gleichzeitig aber auch für eine untere Belüftung des Innentopfs 30 dienen.

Der Untersetzer 40 wird anhand der Fig. 5a, 5b und 5c erläutert. Zwischen Umlaufkante 44 und Ringwand 45 befindet sich der Überlauf 46. Durch die Ringwand 45 wird der Wasserspeicherraum 47 definiert. Innerhalb des Wasserspeicherraums 47 sind Zentriermittel 48 vorgesehen, die die korrekte Platzierung des Innentopfs 30 innerhalb des Untersetzers 40 und damit auch gleichzeitig innerhalb des Außentopfes 10 gewährleisten. Auf der Unterseite des Untersetzers 40 befinden sich Aufstellelemente 49. Die Aufstellelemente 49 sind mit einem Aufstellkreis 49b verbunden. Im Wasserspeicherraum 47 befinden sich Aufstandselemente 49a, auf die der Innentopf 30 aufsteht, so dass sich zwischen dem Boden des Untersetzers 40 im Wasserspeicherraum 47 zwischen den Aufstandselementen 49a eine Öffnung bildet, durch die Wasser hindurchtreten kann. Der Untersetzer 40 ist in den Figuren 5a bis 5c dargestellt.

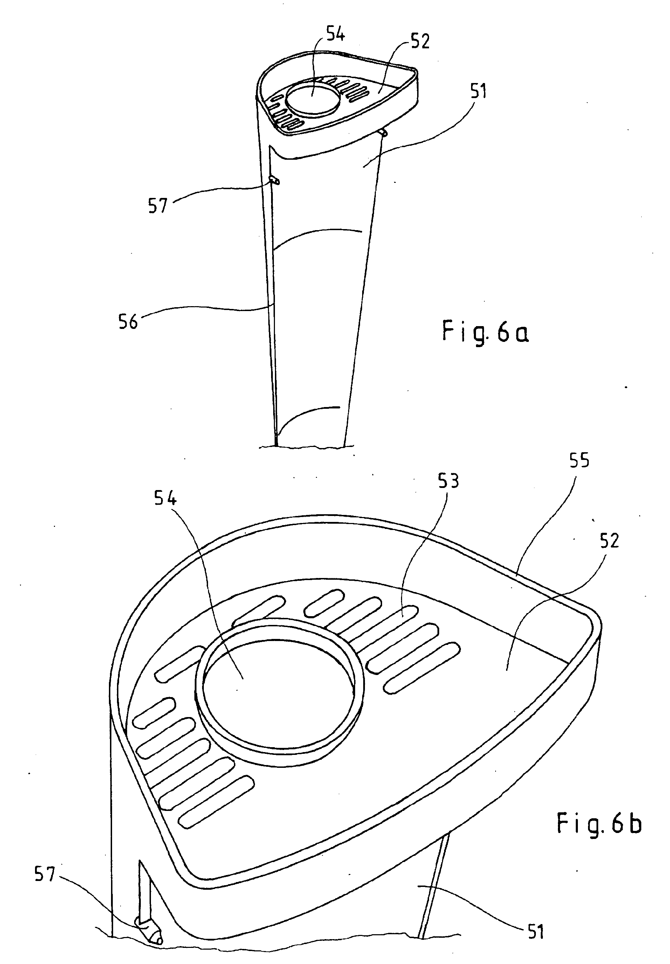

Fig. 6a und Fig. 6b zeigen das Wassernachfüllelement 50, welches auch in Fig. 2 dargestellt ist. Das Wassernachfüllelement 50 besteht aus einem Zylindermantelflächenelement 51 als Trennelement und einem Eingießbereich 52. Der Eingießbereich 52 ist mit Öffnungen 53 versehen, durch die das auf den Eingießbereich 52 aufgegebene Wasser durchtreten kann. Des Weiteren weist der Eingießbereich 52 eine Öffnung 54 auf, durch die der Wasserstandsanzeiger 60 eingesetzt wird. Der Eingießbereich 52 ist von einer Wandung 55 umgeben. An den Außenkanten 56 des Zylindermantelflächenelementes 51 sind Haltestifte 57 angeordnet, die in Öffnungen 31 des Innentopfes 30 eingesetzt werden können.

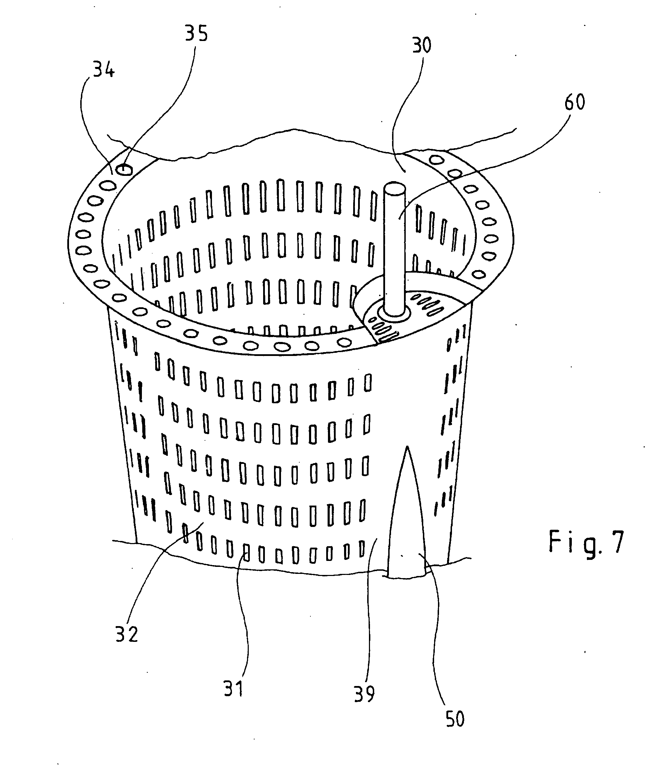

Fig. 7 zeigt die Anordnung des Innentopfes 30 mit dem Wassernachfüllelement 50 und dem darin eingesetzten Wasserstandsanzeiger 60.

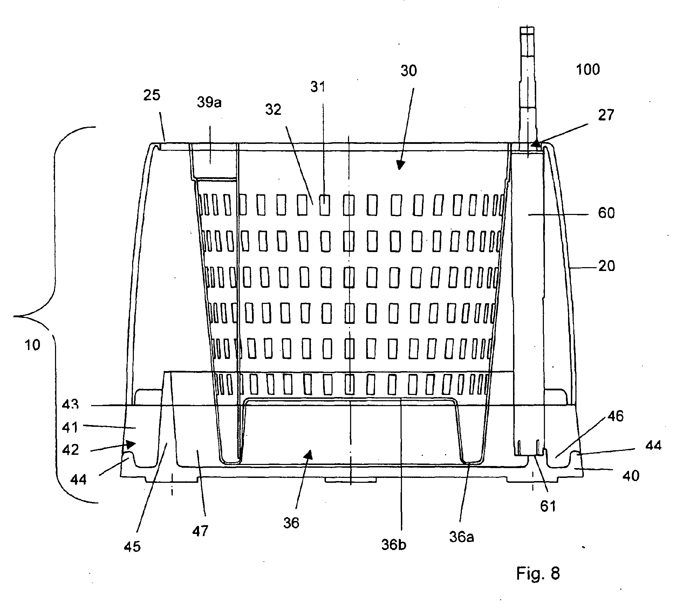

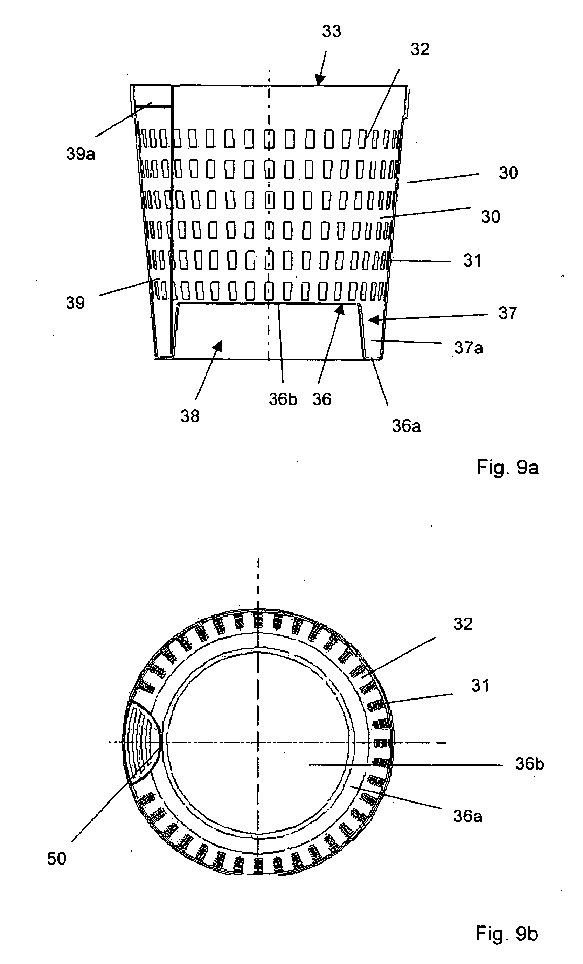

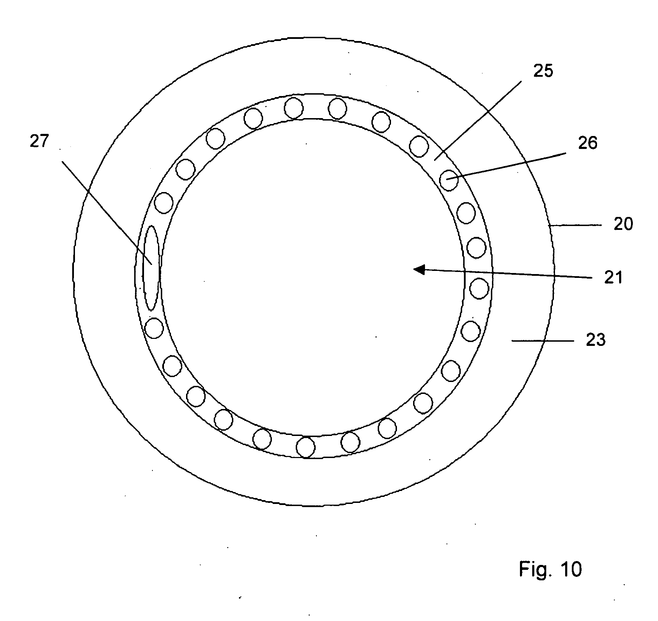

Fig. 8 zeigt eine geschnittene Seitenansicht einer zweiten Ausführungsform eines Pflanzentopfes 100. Auf einem Untersetzer 40 ist ein Außenmantel 20 angeordnet, in dem ein Innentopf 30 eingesetzt ist. Der Untersetzer 40 weist wiederum einen Wasseraufnahmespeicher 47 auf, der durch eine Regenwand 45 gebildet ist. In der Regenwand 45 ist eine Aufnahme 61 für den Wasserstandsanzeiger 60 vorgesehen. Der Außenmantel 20 ist mit einem nach innen verlaufenden Rand 25 versehen, in dem sich Belüftungsöffnungen 26 und eine Aufnahmeöffnung 27 für den Wasserstandsanzeiger 60 befinden (siehe Fig. 10). Der Innentopf 30 ist randlos ausgeführt und in den nach innen gerichteten Rand 25 des Außenmantels 20 eingesetzt und steht wiederum zentriert durch die Zentrierungsmittel 48 im Wasserspeicher 47. Der Innentopf 30 ist in den Figuren 9a und 9b als zweite Ausführungsform randlos dargestellt. In Fig. 9b ist eine Draufsicht zu sehen, in der wiederum ein Wassernachfüllelement 50 in den Innentopf eingesetzt ist. Die randlose Ausführungsform des Innentopfes 30 ist wiederum in Fig. 9a zu sehen. Der Innentopf weist ebenfalls eine Aufnahme 39 für das Wassernachfüllelement 50 auf mit einer ersten Aussparung 39a im Bereich der oberen Öffnung 33.

## Patentansprüche

1. Pflanzentopf (100), insbesondere für Zimmerpflanzen, aufweisend
- einen nach oben offenen Außentopf (10), der einen Innenraum zumindest teilweise umgibt, wobei der Außentopf (10) im unteren Bereich mit wenigstens zwei Öffnungen (42) zur Belüftung des Innenraums versehen ist,
- einen nach oben offenen Innentopf (30) zur Aufnahme von Pflanzsubstrat,
wobei der Innentopf (30) in den Außentopf (10) einsetzbar ist,
- eine Wasseraufnahme mit einem Wasserspeicherraum, die so angeordnet ist, dass Feuchtigkeit zwischen dem Innentopf (30) und dem Wasserspeicherraum ausgetauscht wird, und
- ein Wassernachfüllelement (50), das ein gezieltes Befüllen der Wasseraufnahme bei im Außentopf (10) eingesetzten Innentopf (30) ermöglicht,
wobei der Innentopf (30) zumindest teilweise so in dem Innenraum angeordnet ist, dass zwischen dem Innentopf (30) und dem Außentopf (10) ein Zwischenraum vorgesehen ist, der die Öffnungen (42) im unteren Bereich des Außentopfs (10) und wenigstens eine obere Öffnung (26, 35) im Bereich des oberen Randes des Pflanzentopfs (100) miteinander verbindet, und dass der Innentopf (30) aus dem Innenraum des Außentopfes (10) im bepflanzten Zustand entnommen und wieder in diesen eingesetzt werden kann, **dadurch gekennzeichnet, dass**
- der Innentopf (30) in den Außentopf (10) eingestellt ist und
- auf der Wasseraufnahme (40) aufsteht,
wobei der Innentopfboden (36) mit wenigstens einer zur oberen Öffnung (33) des Innentopfes gerichteten Vertiefung (38) versehen ist.

2. Pflanzentopf nach Anspruch 1, **dadurch gekennzeichnet, dass** der Außentopf (10) wenigstens zweiteilig in Form eines Mantels (20) und eines Untersetzers (40) aufgebaut ist.

3. Pflanzentopf nach Anspruch 2, **dadurch gekennzeichnet, dass** der zweiteilige Außentopf (10) aus einem Mantel (20) und einem Untersetzer (40) die wenigstens zwei Öffnungen (42) zur Belüftung in Form von zwei verbundenen Öffnungen als umlaufenden Belüftungsschlitz aufweist, der ggf. durch die Stege (41) in mehrere Öffnungen geteilt wird.

4. Pflanzentopf nach Anspruch 3, **dadurch gekennzeichnet, dass** der Untersetzer (40) Aufstandsaufnahmen (43) für den Mantel (20) aufweist.

5. Pflanzentopf nach Anspruch 3 oder 4, **dadurch gekennzeichnet, dass** die Wasseraufnahme (40) in den Untersetzer (40) integriert ist.

6. Pflanzentopf nach einem der Ansprüche 1 bis 5, **dadurch gekennzeichnet, dass** die Wasseraufnahme (40) mit Zentrierungsmitteln (48) für den Innentopf (30) versehen ist.

7. Pflanzentopf nach einem der Ansprüche 1 bis 6, **dadurch gekennzeichnet, dass** die Wasseraufnahme (40) mit einem Überlauf (46) versehen ist.

8. Pflanzentopf nach Anspruch 7, **dadurch gekennzeichnet, dass** der Überlauf (46) in den unteren Bereichen der Belüftungsöffnungen (42) des Außentopfes (10) angeordnet ist, bevorzugt segmentiert.

9. Pflanzentopf nach Anspruch 7 oder 8, **dadurch gekennzeichnet, dass** der Wasserspeicherraum (47) und der Überlauf (46) durch eine Ringwand (45) getrennt sind.

10. Pflanzentopf nach einem der Ansprüche 1 bis 9, **dadurch gekennzeichnet, dass** die oberen Belüftungsöffnungen (26, 36) in einem am Innentopf (30) vorgesehen und seitlich zum oberen Rand des Außentopfs (10) hin abstehenden Rand (34) und/oder in einem am Außentopf (10) vorgesehenen und seitlich zum oberen Rand des Innentopfes (30) hin abstehenden Rand (25) angeordnet sind.

11. Pflanzentopf nach einem der Ansprüche 1 bis 10, **dadurch gekennzeichnet, dass** eine Wasserstandsanzeige (60) für den Wasserstand in der Wasseraufnahme (40) angeordnet ist, wobei die Wasserstandsanzeige (60) bevorzugt innerhalb des Wassernachfüllelements (50) und/oder in den oberen Belüftungsöffnungen (26, 36) angeordnet ist.

12. Pflanzentopf nach einem der Ansprüche 1 bis 11, **dadurch gekennzeichnet, dass** das Wassernachfüllelement (50) einen Eingießbereich (52) aufweist.

13. Pflanzentopf nach einem der Ansprüche 1 bis 12, **dadurch gekennzeichnet, dass** das Wassernachfüllelement (50) in dem Innenraum des Innentopfes (30) in einen dafür vorgesehenen Aufnahmebereich (39), der bevorzugt eine Aussparung (39a, 39b) ist, angeordnet ist.

14. Pflanzentopf nach Anspruch 13, **dadurch gekennzeichnet, dass** die Aussparung (39b) zur Aufnahme des Wassernachfüllelements (50) im Innentopf (30) sich ausgehend vom Boden (36) ellipsenförmig entlang des Aufnahmeabschnittes (39) erstreckt.

15. Pflanzentopf nach Anspruch 13, **dadurch gekennzeichnet, dass** die Wandung des Innentopfes (30) im Aufnahmebereich (39) nicht mit Öffnungen (31) versehen ist.

16. Pflanzentopf nach einem der Ansprüche 1 bis 15, **dadurch gekennzeichnet, dass** das Wassernachfüllelement (50) aus einem Trennelement (51) besteht, dass bevorzugt einen abgeschlossenen Kanal mit der Wandung (32) des Innentopfes (30) bildet.

17. Pflanzentopf nach Anspruch 16, **dadurch gekennzeichnet, dass** das Trennelement (51) als ein Zylindermantelflächenelement (51) ausgeführt ist.

18. Pflanzentopf nach einem der Ansprüche 1 bis 17, **dadurch gekennzeichnet, dass** der Außenmantel (20) sich nach unten konisch verbreitert.

19. Pflanzentopf nach einem der Ansprüche 1 bis 18, **dadurch gekennzeichnet, dass** die Vertiefungshöhe größer ist, als die maximale Wasserstandshöhe des Wassers in dem Wasserspeicherraum (47) der Wasseraufnahme (40).

20. Pflanzentopf nach einem der vorhergehenden Ansprüche, **dadurch gekennzeichnet, dass** der Innentopf (30) Aufstandsabschnitte (37) aufweist deren Bodenabschnitt (36a) mit Öffnungen (37b) versehen ist.

21. Pflanzentopf nach einem der vorhergehenden Ansprüche, **dadurch gekennzeichnet, dass** die Vertiefung (38) im Innentopfboden (36) eine größere Tiefe hat als die Höhe der Ringwand (45).

## Claims

1. A plant pot (100), in particular for house plants, having
- an upwardly-open outer pot (10) which at least partially surrounds an interior space, wherein the lower region of the outer pot (10) is provided with at least two openings (42) for aeration of the interior space,
- an upwardly-open inner pot (30) to receive plant substrate, wherein the inner pot (30) can be placed in the outer pot (10),
- a water receiver with a water storage chamber, the receiver being arranged in such a manner that moisture is exchanged between the inner pot (30) and the water storage chamber, and
- a water topping-up element (50) enabling targeted filling of the water receiver when the inner pot (30) is inserted in the outer pot (10),
wherein the inner pot (30) is at least partially arranged in the interior space in such a manner that an intermediate space is provided between the inner pot (30) and the outer pot (10), which intermediate space connects to one another the openings (42) in the lower region of the outer pot (10) and at least one upper opening (26, 35) in the region of the upper edge of the plant pot (100), and in that the inner pot (30) can in the planted state be removed from the interior space of the outer pot (10) and inserted therein again, **characterised in that**
- the inner pot (30) is put into the outer pot (10) and
- stands on the water receiver (40),
the inner pot base (36) being provided with at least one recess (38) directed towards the upper opening (33) of the inner pot.

2. A plant pot according to claim 1, **characterised in that** the outer pot (10) is at least two-part, in the form of a casing (20) and a saucer (40).

3. A plant pot according to claim 2, **characterised in that** the two-part outer pot (10) is formed of a casing (20) and a saucer (40) which has at least two openings (42) for aeration in the form of two connected openings as an encircling aeration slot which is optionally divided into a plurality of openings by the bars (41).

4. A plant pot according to claim 3, **characterised in that** the saucer (40) has supporting receivers (43) for the casing (20).

5. A plant pot according to claim 3 or 4, **characterised in that** the water receiver (40) is integrated into the saucer (40).

6. A plant pot according to any one of claims 1 to 5, **characterised in that** the water receiver (40) is provided with centring means (48) for the inner pot (30).

7. A plant pot according to any one of claims 1 to 6, **characterised in that** the water receiver (40) is provided with an overflow (46).

8. A plant pot according to claim 7, **characterised in that** the overflow (46) is arranged in the lower regions of the aeration openings (42) of the outer pot (10), preferably segmented.

9. A plant pot according to claim 7 or 8, **characterised in that** the water storage chamber (47) and the overflow (46) are separated by an annular wall (45).

10. A plant pot according to any one of claims 1 to 9, **characterised in that** the upper aeration openings (26, 36) are arranged in an edge (34) which is provided on the inner pot (30) and which projects laterally towards the upper edge of the outer pot (10) and/or in an edge (25) which is provided on the outer pot (10) and which projects laterally towards the upper edge of the inner pot (30).

11. A plant pot according to any one of claims 1 to 10, **characterised in that** a water-level indicator (60) for the water level is arranged in the water receiver (40), the water-level indicator (60) preferably being arranged within the water topping-up element (50) and/or in the upper aeration openings (26, 36).

12. A plant pot according to any one of claims 1 to 11, **characterised in that** the water topping-up element (50) has a pouring-in region (52).

13. A plant pot according to any one of claims 1 to 12, **characterised in that** the water topping-up element (50) is arranged in the interior space of the inner pot (30), in a receiving region (39) which is provided for this purpose and which is preferably a cut-out (39a, 39b).

14. A plant pot according to claim 13, **characterised in that** the cut-out (39b) for receiving the water topping-up element (50) in the inner pot (30) issues from the base and extends in the form of an ellipse along the receiving portion (39).

15. A plant pot according to claim 13, **characterised in that** in the receiving region (39), the wall of the inner pot (30) is not provided with openings (31).

16. A plant pot according to any one of claims 1 to 15, **characterised in that** the water topping-up element (50) consists of a separating element (51) which preferably forms a closed channel with the wall (32) of the inner pot (30).

17. A plant pot according to claim 16, **characterised in that** the separating element (51) is in the form of a cylinder shell element (51).

18. A plant pot according to any one of claims 1 to 17, **characterised in that** the outer casing (20) widens conically downwards.

19. A plant pot according to any one of claims 1 to 18, **characterised in that** the recess height is greater than the maximum water-level height of the water in the water storage chamber (47) of the water receiver (40).

20. A plant pot according to any one of the preceding claims, **characterised in that** the inner pot (30) has supporting portions (37) whose base portion (36a) is provided with openings (37b).

21. A plant pot according to any one of the preceding claims, **characterised in that** the depth of the recess (38) in the inner pot base (36) is greater than the height of the annular wall (45).

## Revendications

1. Pot à plantes (100), en particulier pour plantes d'appartement, comprenant un pot extérieur (10) qui est ouvert vers le haut et qui entoure au moins partiellement un espace intérieur, le pot extérieur (10) étant pourvu, dans sa zone inférieure, d'au moins deux ouvertures (42) pour l'aération de l'espace intérieur, un pot intérieur (30) ouvert vers le haut et destiné à recevoir du substrat pour plantes, le pot intérieur (30) pouvant être inséré dans le pot extérieur (10), un réceptacle d'eau avec un réservoir d'eau, qui est disposé de façon qu'il y ait échange d'humidité entre le pot intérieur (30) et le réservoir d'eau, et un élément de réapprovisionnement en eau (50) qui permet un remplissage ciblé du réceptacle d'eau lorsque le pot intérieur (30) est inséré dans le pot extérieur (10), le pot intérieur (30) étant disposé au moins partiellement dans l'espace intérieur, de façon qu'entre le pot intérieur (30) et le pot extérieur (10) soit ménagé un intervalle qui relie les ouvertures (42) de la zone inférieure du pot extérieur (10) et au moins une ouverture supérieure (26, 35) de la zone du bord supérieur du pot à plantes (100), et de façon que le pot intérieur (30) garni de plantes puisse être sorti de l'espace intérieur du pot extérieur (10) et y être réinséré, **caractérisé en ce que** le pot intérieur (30) est placé dans le pot extérieur (10) et repose sur le réceptacle d'eau (40), le fond (36) du pot intérieur étant pourvu d'au moins un renfoncement (38) orienté vers l'ouverture supérieure (33) du pot intérieur.

2. Pot à plantes selon la revendication 1, **caractérisé en ce que** le pot extérieur (10) est conçu au moins en deux parties sous la forme d'un cache (20) et d'un socle (40).

3. Pot à plantes selon la revendication 2, **caractérisé en ce que** le pot extérieur en deux parties (10) constitué d'un cache (20) et d'un socle (40) est pourvu des ouvertures (42) d'aération au nombre d'au moins deux en forme de deux ouvertures communicantes conformées en fente d'aération périphérique, laquelle est divisée le cas échéant en plusieurs ouvertures par les barrettes (41).

4. Pot à plantes selon la revendication 3, **caractérisé en ce que** le socle (40) comporte des logements d'appui (43) pour le cache (20).

5. Pot à plantes selon la revendication 3 ou 4, **caractérisé en ce que** le réceptacle d'eau (40) est intégré au socle (40).

6. Pot à plantes selon une des revendications 1 à 5, **caractérisé en ce que** le réceptacle d'eau (40) est muni de moyens de centrage (48) pour le pot intérieur (30).

7. Pot à plantes selon une des revendications 1 à 6, **caractérisé en ce que** le réceptacle d'eau (40) est pourvu d'un trop-plein (46).

8. Pot à plantes selon la revendication 7, **caractérisé en ce que** le trop-plein (46) est disposé, de préférence en étant segmenté, dans les zones inférieures des ouvertures d'aération (42) du pot extérieur (10).

9. Pot à plantes selon la revendication 7 ou 8, **caractérisé en ce que** le réservoir d'eau (47) et le trop-plein (46) sont séparés par une cloison annulaire (45).

10. Pot à plantes selon une des revendications 1 à 9, **caractérisé en ce que** les ouvertures d'aération supérieures (26, 36) sont ménagées dans un bord (34) qui est prévu sur le pot intérieur (30) et qui fait saillie latéralement vers le bord supérieur du pot extérieur (10) et/ou dans un bord (25) qui est prévu sur le pot extérieur (10) et qui fait saillie vers le bord supérieur du pot intérieur (30).

11. Pot à plantes selon une des revendications 1 à 10, **caractérisé en ce qu'**un indicateur de niveau d'eau (60) pour le niveau d'eau est disposé dans le réceptacle d'eau (40), l'indicateur de niveau d'eau (60) étant disposé de préférence à l'intérieur de l'élément de réapprovisionnement en eau (50) et/ou dans les ouvertures d'aération supérieures (26, 36).

12. Pot à plantes selon une des revendications 1 à 11, **caractérisé en ce que** l'élément de réapprovisionnement en eau (50) comporte une zone de versage (52).

13. Pot à plantes selon une des revendications 1 à 12, **caractérisé en ce que** l'élément de réapprovisionnement en eau (50) est disposé dans l'espace intérieur du pot intérieur (30) dans une zone réceptrice (39) qui est prévue à cet effet et qui est de préférence un évidement (39a, 39b).

14. Pot à plantes selon la revendication 3, **caractérisé en ce que**, pour loger l'élément de réapprovisionnement en eau (50) dans le pot intérieur (30), l'évidement (39b) s'étend de manière elliptique le long de la portion réceptrice (39) à partir du fond (36).

15. Pot à plantes selon la revendication 13, **caractérisé en ce que**, dans la zone réceptrice (39), la paroi du pot intérieur (30) n'est pas pourvue d'ouvertures (31).

16. Pot à plantes selon une des revendications 1 à 15, **caractérisé en ce que** l'élément de réapprovisionnement en eau (50) est constitué d'un élément séparateur (51) qui forme de préférence un canal fermé avec la paroi (32) du pot intérieur (30).

17. Pot à plantes selon la revendication 16, **caractérisé en ce que** l'élément séparateur (51) est conçu sous la forme d'un élément à surface d'enveloppe cylindrique (51).

18. Pot à plantes selon une des revendications 1 à 17, **caractérisé en ce que** le cache extérieur (20) s'élargit sous forme conique vers l'extérieur.

19. Pot à plantes selon une des revendications 1 à 18, **caractérisé en ce que** la hauteur du renfoncement est supérieure à la hauteur maximale de niveau d'eau de l'eau dans le réservoir d'eau (47) du réceptacle d'eau (40).

20. Pot à plantes selon une des revendications précédentes, **caractérisé en ce que** le pot intérieur (30) comporte des portions d'appui (37) dont la portion de fond (36a) est pourvue d'ouvertures (37b).

21. Pot à plantes selon une des revendications précédentes, **caractérisé en ce que** le renfoncement (38) du fond (36) du pot intérieur possède une profondeur supérieure à la hauteur de la cloison annulaire (45).
